# EUROPEAN PATENT APPLICATION

(11) **EP 3 998 364 A1**
(43) Date of publication of application: **18.05.2022**
(21) Application number: 20836032.1
(22) Date of filing: 07.07.2020
(51) Int. Cl.: C22C 1/05, C08J 3/28, C08J 3/20, C08L 67/02, C08K 3/08, B22F 3/12, B22F 3/105, C22C 1/04

(54) **METHOD FOR PREPARING METAL-POLYMER COMPOSITE MATERIAL WITH HIGH HEAT DISSIPATION AND ELECTRICAL INSULATION PERFORMANCE AND COMPOSITE MATERIAL PREPARED THEREBY**

(30) Priority: 08.07.2019 KR 20190082105
(71) Applicant: Pukyong National University Industry - University Cooperation Foundation, Busan 48547 (KR)
(72) Inventor: KWON, Han Sang, Busan 48275 (KR)
(74) Representative: EP&C
(86) International application number: PCT/KR2020/008862
(87) International publication number: WO 2021/006602

(57) **Abstract**

A method of manufacturing a metal-polymer composite material having excellent thermal conductivity and electrical insulating properties is proposed. The method includes (a) preparing a powder mixture of polymer powder and metal powder, and (b) spark plasma sintering (SPS) the powder mixture to produce a composite material. A metal-polymer composite material having excellent thermal conductivity and electrical insulating properties, manufactured by the method, is also proposed.

## Description

### CROSS REFERENCE TO RELATED APPLICATION

The present application claims priority to Korean Patent Application No. 10-2019-0082105, filed on July 08, 2019, the entire contents of which is incorporated herein for all purposes by this reference.

### BACKGROUND OF THE INVENTION

### Field of the Invention

The present disclosure relates to a method of manufacturing a bulk composite material having thermal conductivity and electrical insulating properties, and a composite material manufactured using the same.

### Description of the Related Art

Generally, metallic materials have excellent mechanical properties and very high thermal conductivity compared to polymer materials.

In contrast, polymer materials have relatively low density and mechanical properties compared to metallic materials, as well as near zero thermal conductivity and electrical insulating properties. However, due to relatively high corrosion resistance and flexible processing characteristics compared to metallic materials, the polymer materials have been used as various industrial materials together with metallic materials.

On the other hand, in recent years, the issue concerned to control of thermal characteristics has been greatly emphasized, and there is a need for the development of lightweight composite materials having electrical insulating properties as well as high thermal conductivity.

The foregoing is intended merely to aid in the understanding of the background of the present invention, and is not intended to mean that the present invention falls within the purview of the related art that is already known to those skilled in the art.

### Documents of Related Art

(Patent Document 1) Korean Patent No. 10-1736108 (Registered on May 10, 2017)
(Patent Document 2) Korean Patent No. 10-1694528 (Registered on January 03, 2017)

### SUMMARY OF THE INVENTION

Accordingly, the present invention has been made keeping in mind the above problems occurring in the related art, and an objective of the present disclosure is to provide a method of manufacturing a lightweight bulk metal-polymer composite material having excellent thermal conductivity and electrical insulating properties, as well as high density at a relatively low temperature, in which method the blending ratio between polymer and metal material can be freely adjusted, and the shape and dimension of the composite material can be freely controlled.

In order to achieve the above objective, according to one aspect, the present disclosure provides a method of manufacturing a metal-polymer composite material having excellent thermal conductivity and electrical insulating properties, the method including: (a) preparing a powder mixture of polymer powder and metal powder; and (b) spark plasma sintering (SPS) the powder mixture to produce a composite material.

The polymer may be (i) a thermosetting resin selected from phenol resins, epoxy resins, and polyimide resins, or (ii) a thermoplastic resin selected from olefinic resins, acrylic resins, vinylic resins, styrenic resins, fluoric resins, and fibrin resins.

The polymer may be a polyesteric resin.

The polyesteric resin may be polyarylate (PAR).

The metal may be one kind of metal or an alloy of more than one kind of metal selected from a group including Al, Cu, Ti, Mg, K, Ca, Sc, V, Cr, Mn, Fe, Co, Ni, Zn, Ga, Rb, Sr, Y, Zr, Mo, Ru, Rh, Pd, Ag, Cd, In, Sn, Cs, Ba, La, Ce, Nd, Sm, Eu, Gd, Tb, W, Cd, Sn, Hf, Ir, Pt, and Pb.

The metal may be Al, Mg, or Al-Mg alloy.

In the step (b), the spark plasma sintering may be performed at a temperature of 150 to 450°C under a pressure of 5 to 100 MPa for 1 to 10 minutes.

In another aspect, the present disclosure provides a metal-polymer composite material having excellent thermal conductivity and electrical insulating properties, which is manufactured by the manufacturing method described above.

The metal-polymer composite material may have a composition of 1 to 99% by volume of metal and 1 to 99% by volume of polymer.

The metal-polymer composite material may be a functionally graded material (FGM) having a sheet shape of a structure in which two or more layers having different volume ratios of polymer and metal are stacked.

According to the present disclosure, the metal-polymer composite material is designed to maximize the advantages of each material and offset the disadvantages thereof so that the metal-polymer composite material can be customized and applied to machinery, automobiles, trains, ships, aerospace, and especially electrical/electronic material parts, which require highly thermal conductive and electrically insulating, and lightweight parts.

### BRIEF DESCRIPTION OF THE DRAWINGS

The above and other objectives, features and advantages of the present disclosure will be more clearly understood from the following detailed description when taken in conjunction with the accompanying drawings, in which:
FIG. 1 is a process flow diagram of a method of manufacturing a metal-polymer composite material having high thermal conductivity and electrical insulating properties according to the present disclosure;
FIGS. 2 to 7 are FE-SEM images of metal or polymer powder used in manufacturing the metal-polymer composite material according to an exemplary embodiment;
FIGS. 8 to 13 are FE-SEM images of a metal/polymer powder mixture prepared through mixing of metal powder and polymer powder followed by a mechanical milling process for preparing the metal-polymer composite material according to the exemplary embodiment; and
FIGS. 14 to 16 are photo of a sintered body of metal-polymer composite material prepared according to the exemplary embodiment.

### DETAILED DESCRIPTION OF THE INVENTION

In the following description, it is to be noted that, when the functions of conventional elements and the detailed description of elements related with the present disclosure may make the gist of the present disclosure unclear, a detailed description of those elements will be omitted.

The embodiments according to the concept of the present disclosure may be modified in various ways and have various forms, and thus specific embodiments will be illustrated in the drawings and described in detail in the present specification or application. However, this is not intended to limit the embodiment according to the concept of the present disclosure to the disclosed specific forms, and it should be understood to include all modifications, equivalents, and substitutes included in the spirit and scope of the present disclosure.

The terminology used herein is for the purpose of describing particular embodiments only and is not intended to limit the invention. As used herein, the singular forms "a", "an", and "the" are intended to include the plural forms as well, unless the context clearly indicates otherwise. It will be further understood that the terms "comprises" and/or "comprising", or "includes" and/or "including", when used in this specification, specify the presence of stated features, integers, steps, operations, elements and/or components, but do not preclude the presence or addition of one or more other features, integers, steps, operations, elements, components and/or groups thereof.

The present disclosure will now be described in detail.

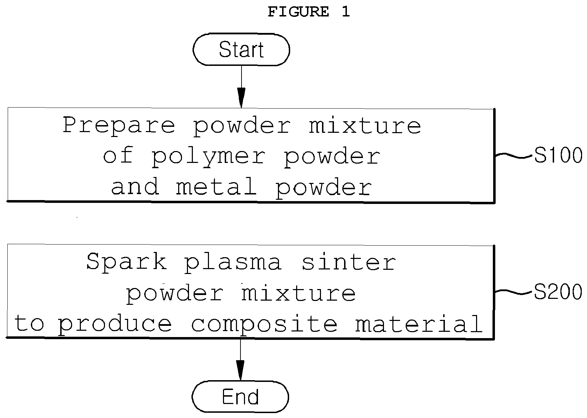

The present disclosure provides a method of manufacturing a metal-polymer composite material having excellent thermal conductivity and electrical insulating properties, by (a) preparing a powder mixture of polymer powder and metal powder; and (b) spark plasma sintering (SPS) the powder mixture to produce a composite material (FIG. 1).

In step (a), a homogeneous powder mixture is prepared by mixing polymer powder and metal powder through various types of ball milling processes such as electric ball milling, stirred ball milling, and planetary ball milling. For example, a low energy milling process using a conventional electric ball milling machine may be performed at 100 to 500 rpm for 1 to 20 hours to produce the powder mixture of metal and polymer powder.

The polymer powder may be composed of a thermoplastic resin or a thermosetting resin.

Examples of the thermoplastic resin include olefinic resins, such as polyethylene, polypropylene, and poly-4-methylpentene-1, acrylic resins, such as polymethyl methacrylate, and acrylonitrile, vinylic resins, such as polyvinyl chloride, polyvinyl acetate, polyvinyl alcohol, polyvinyl butyral, and polyvinylidene chloride, styrenic resins, such as polystyrene, and ABS resin, fluoric resins, such as tetrafluoroethylene resin, trifluoroethylene resin, polyvinylidene fluoride, and polyvinyl fluoride, and fibrin resins such as nitrocellulose, cellulose acetate, ethyl cellulose, and propylene cellulose. In addition, polyamide, polyamide imide, polyacetal, polycarbonate, polyethylene butarate, polybutylene butarate, ionomer, polysulfone, polyethersulfone, polyphenylene ether, polyphenylene sulfide, polyetherimide, polyetheretherketone, aromatic polyester (econol, polyarylate) and the like can be used.

In addition, examples of the thermosetting resin include phenol resin, epoxy resin, and polyimide resin.

In the metal-polymer composite material, the metal may be one kind of metal or an alloy of more than one kind of metal selected from a group including Al, Cu, Ti, Mg, K, Ca, Sc, V, Cr, Mn, Fe, Co, Ni, Zn, Ga, Rb, Sr, Y, Zr, Mo, Ru, Rh, Pd, Ag , Cd, In, Sn, Cs, Ba, La, Ce, Nd, Sm, Eu, Gd, Tb, W, Cd, Sn, Hf, Ir, Pt, and Pb.

The composition of the powder mixture prepared in step (a) is not particularly limited, but may have the mixing ratio between the polymer and the metal material selected according to the application of the final composite material. Preferably, the mixing ration may have 1 to 99% by volume of polymer powder and 1 to 99% by volume of metal powder.

On the other hand, in the step (a), prior to the spark plasma sintering in step (b) to be described later may further include the sub-step of manufacturing a molded body from the powder mixture. The molded body may be used without limitation as long as it is a conventional method for forming a molded body using powder, and for example, a method of manufacturing a preform by supplying a powder mixture to a mold may be provided.

More specifically, a preform may be produced through a process of filling the powder mixture in a mold provided in a chamber of a spark plasma sintering apparatus. The mold may be provided in various shapes, such as rods or plates, and may be made of a material that is stable at high temperatures so that it cannot act as an impurity in the spark plasma sintering process described later.

Next, the step (b) is a step of preparing a metal-polymer composite material by spark plasma sintering (SPS) of the powder mixture prepared in step (a).

In the spark plasma sintering, a spark discharge phenomenon is generated by a pulsed DC current flowing between particles of the powder mixture by applying a DC current to the powder mixture under pressure applied conditions, whereby the powder mixture is sintered with heat diffusion and electric field diffusion occurring due to both instant high energy of the discharge plasma and heat generated by electric resistance of the mold so that the polymer and metal material can be composited in a short time to produce a composite material having a dense structure. The sintering ability can effectively control the growth of the composite material particles, and thus manufacture a metal-polymer composite material having a uniform microstructure.

In the present disclosure, the spark plasma sintering process may be performed by a spark plasma sintering apparatus which includes, for example, a chamber accommodating a mold having an upper electrode and a lower electrode provided to supply a current to generate a discharge plasma, thereby sintering the powder mixture, a cooling unit capable of cooling the chamber through distribution of cooling water, a power supply supplying a current to the upper electrode and the lower electrode, a temperature sensor unit capable of detecting a temperature of the chamber, and a pump capable of discharging an internal gas in the chamber to the outside, a pressure supply capable of supplying a pressure to the inside of the chamber, a controller controlling the temperature of the spark plasma sintering process in response to the temperature sensed by the temperature sensor unit, and a manipulator unit capable of manipulating the controller.

In this step, the spark plasma sintering process may be performed by discharging and pressure-reducing the chamber using the pump provided in the discharge plasma apparatus until the chamber is evacuated so that the gaseous impurities present in the chamber are removed and oxidation is prevented.

In addition, the spark plasma sintering process may be performed after heating the powder mixture to a sintering temperature at a heating rate of 100°C/min to preheat the powder mixture. With this spark plasma sintering process, the powder mixture can be preheated at the heating rate so that uniform temperature is supplied throughout the powder mixture, thereby forming a metal-polymer composite material having a uniform structure.

In addition, the spark plasma sintering process can control the size of the composite material to be produced by controlling the heating rate to suppress the growth of metal-polymer composite material particles.

The above-described spark plasma sintering process is preferably configured to be performed at a temperature of 150 to 450°C under a pressure of 5 to 100 MPa for 1 to 10 minutes to prepare a metal-polymer composite material.

In addition, after sintering the metal-polymer composite material as described above, the present step may further include the sub-step of cooling the composite material, whereby a metal-polymer composite material having excellent mechanical properties can be obtained. In this step, it is possible to suppress the formation of voids and the like formed on and in the composite material by cooling the metal-polymer composite material under a constant pressure.

Hereinafter, the present disclosure will be described in more detail with reference to Example below.

The embodiments according to the present disclosure may be modified in various other forms, and the scope of the present disclosure is not interpreted to be limited to Example described below. The embodiments of the present disclosure are provided to more fully describe the present invention to those skilled in the art.

### Example: Manufacture and Physical Property Measurement of Metal-Polymer Composite Material

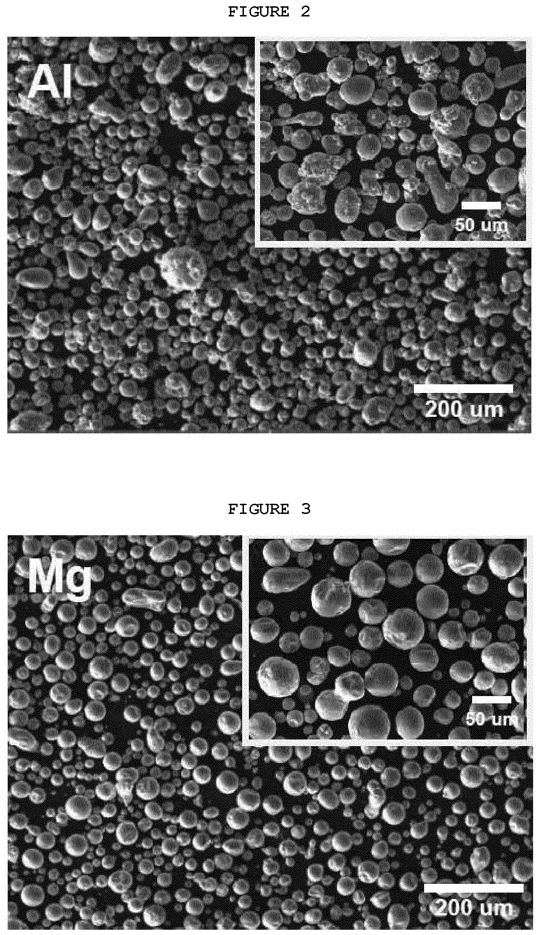

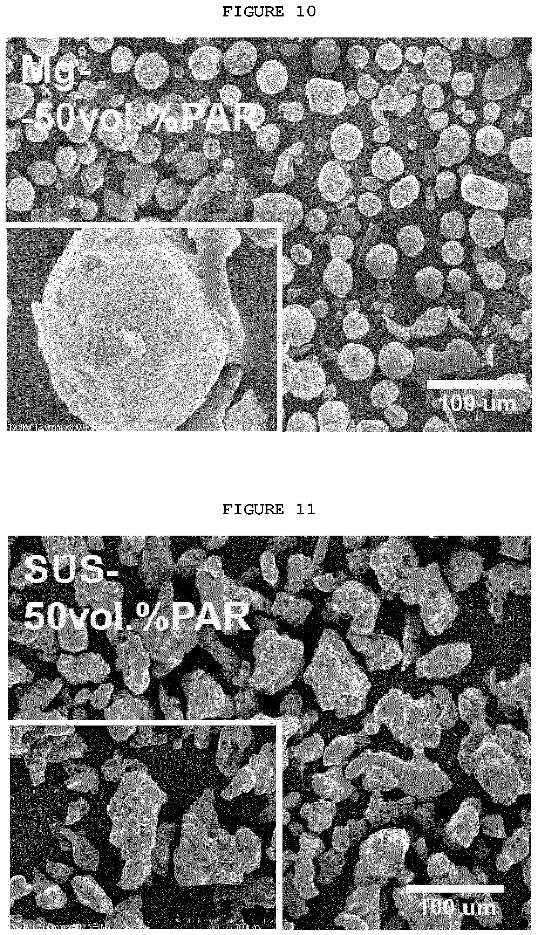

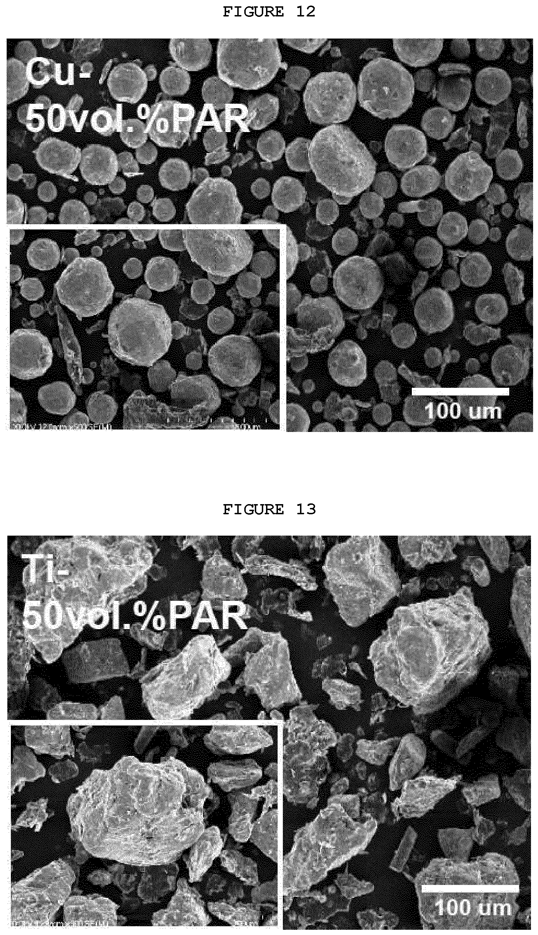

FIGS. 2 to 13 are FE-SEM images of raw powders and power mixture thereof used for the preparation of metal-polymer composite materials in this Example.

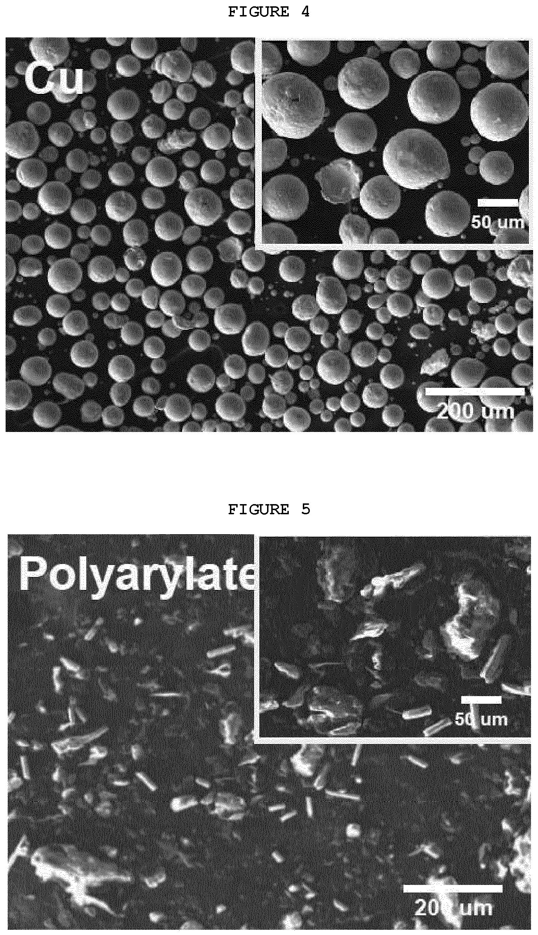

In this Example, polyarylate (PAR) resin was used as the polymer material (FIG. 5).

For reference, polyarylate resin means aromatic linear polyester resin that is a special plastic engineering resin that is transparent and has high heat resistance and mechanical strength, so that it is widely applicable to electric and electronic products, such as switches, sockets, and microwave oven parts, relay case and board; and various materials and packaging materials in the field of machinery, such as interior/exterior products for watches, optical machine parts, thermal appliance parts such as a gas shut-off, or lenses, electronics housings, and instrument panels for housings and automobiles. The polyarylate resin as described above is usually prepared by condensation polymerization of aromatic diol and aromatic dicarboxylic acid.

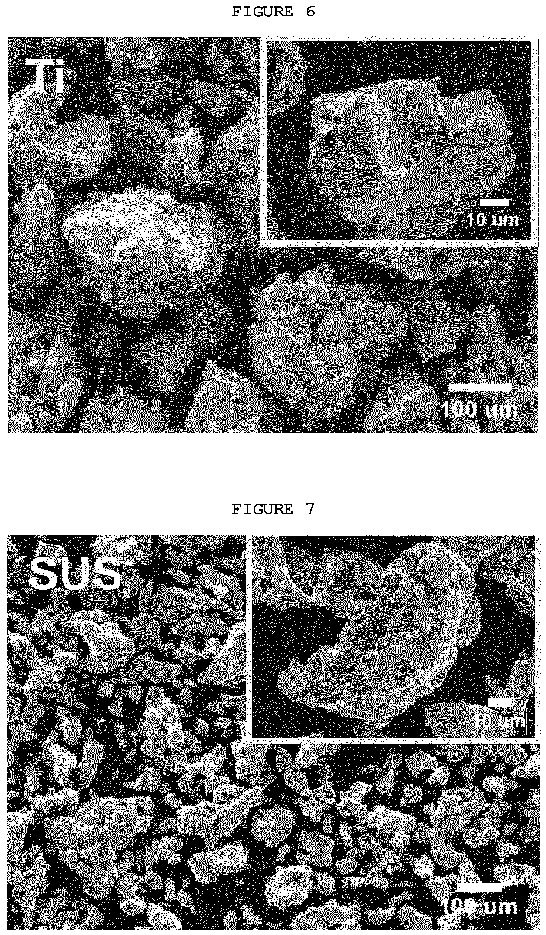

In addition, as the metal power, aluminum (Al) (FIG. 2), magnesium (Mg) (FIG, 3), copper (Cu) (FIG, 4), titanium (Ti) (FIG. 6), stainless steel (SUS) (FIG. 7) or aluminum-magnesium alloy (AlSium) powder was used.

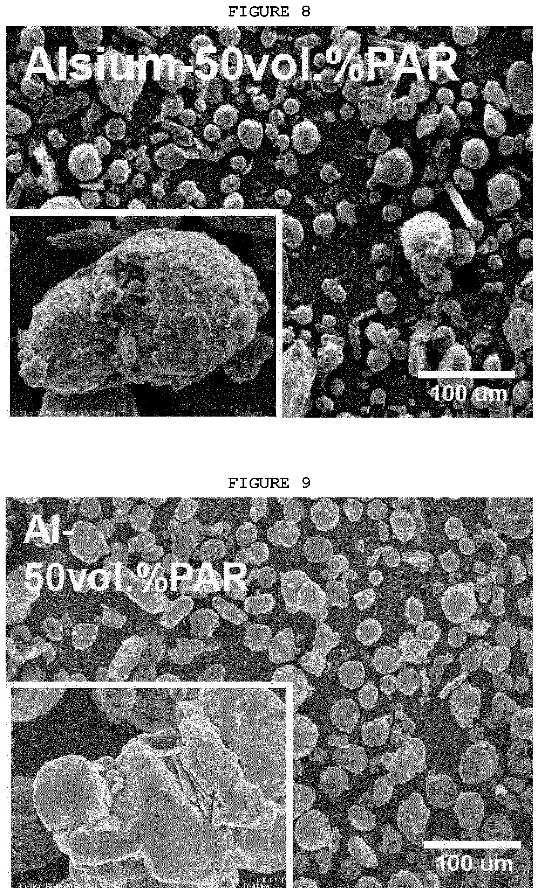

The metal/polymer powder mixture of various compositions were prepared, including the powder mixture shown in FIGS. 8 to 13, in such a manner that the PAR powder and the metal powder are charged into the vial of the ball milling apparatus according to the volume ratio of the composition shown in Table 1 below, 20 mL of heptanes is added, balls are provided under conditions the weight ratio of the balls and the powder mixture being set to 5:1, and the low-energy ball milling process is performed at 160 or 100 rpm for 3 hours according to the milling conditions described in Table 1 below.

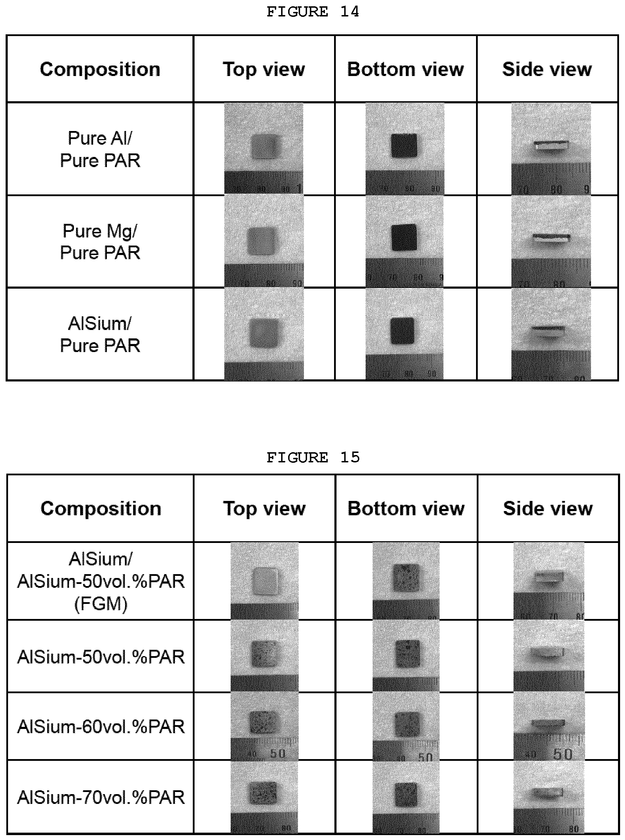

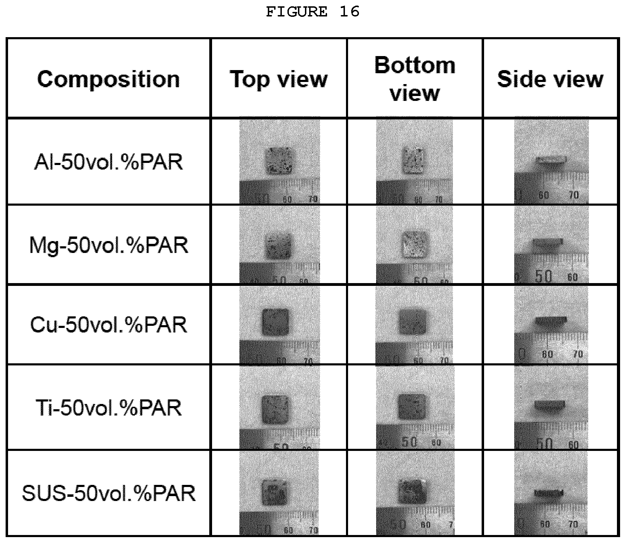

The metal/polymer powder mixture obtained through the milling process was charged into a 10 × 10 mm carbon mold, and the mold was mounted in a chamber of a spark plasma sintering apparatus. The pressure of the chamber was adjusted to a vacuum state, and a current was applied to the upper electrode and the lower electrode to perform a spark plasma sintering process at a temperature of 300°C under a pressure of 50 MPa for 1 minute as shown in Table 1 below to produce a metal-polymer composite material sintered body. In addition, for the production of the functionally graded materials (FGM) having a structure in which metal and PAR were sequentially stacked, after the metal (Al, Mg or AlSium) powder was charged into the carbon mold, and the PAR powder was stacked on a layer of the metal powder, a spark plasma sintering process was performed at a temperature of 300°C under a pressure of 50 MPa for 1 minute to prepare an FGM metal-polymer composite materials (FIGS. 14 to 16).

The physical properties such as thermal conductivity and electrical conductivity of each composite material prepared as described above are listed in Table 1 below.

**Table 1**

| Composition | Density (g/cm²) | Milling condition | Sintering condition | Melting | Heat capacity (J/g·K) | Diffusivity (mm²/s) | Thermal Conductivity (W·m⁻¹·K⁻¹) Exper. | Electrical conductivity (Ω) |
|---|---|---|---|---|---|---|---|---|
| Pure Al/ Pure PAR (FGM) | 2.2321 | 160rpm, 3h, 20ml | 300°C, 50MPa, 1min | ∘ (-303°C 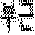 ) | 1.287 | 1.024 | ~ 70 | Al side : ∘ |
| | | | | | | | | PAR side : × |
| Pure Mg/ Pure PAR (FGM) | 1.7171 | | | X | 1.399 | 1.221 | ~ 50 | Mg side : ∘ |
| | | | | | | | | PAR side: × |
| AlSium/ Pure PAR (FGM) | 1.9730 | | | x | 1.277 | 1.520 | ~ 90 | Alsium side : ∘ |
| | | | | | | | | PAR side : × |
| AlSium/ AlSium-50vol.%PAR (FGM) | 2.0480 | | | x | 1.182 | 10.488 | ~ 110 | Alsium side : ∘ |
| | | | | | | | | Alsium-50vol.%PAR side: x |
| AlSium-50vol.%PAR | 2.0099 | | | x | 0.986 | ~ 50.46 | ~ 100 | x |
| AlSium-60vol.%PAR | 1.9610 | | | x | 0.955 | ~ 37.37 | ~ 70 | x |
| AlSium-70vol.%PAR | 1.9231 | | | x | 1.035 | ~ 25.12 | -50 | x |
| Al-50vol.%PAR | 2.2911 | | | x | 1.015 | ~ 29.24 | ~ 68 | x |
| Mg-50vol.%PAR | 1.7054 | | | x | 1.044 | ~ 26.95 | ~ 48 | x |
| Cu-50vol.%PAR | 6.0267 | 100rpm, 3h, 20ml | | x | 0.486 | ~ 40.96 | ~ 120 | ∘ |
| Ti-50vol.%PAR | 3.3684 | | | x | 0.628 | ~5.4 | ~ 11 | ∘ |
| SUS-50vol.%PAR | 4.700 | | | x | 0.850 | ~ 2.5 | ~ 10 | ∘ |

While the embodiments of the present disclosure have been described above with reference to the accompanying drawings, it is apparent to those skilled in the art to which the present disclosure pertains that the embodiments can be implemented in other specific forms without changing the technical spirit or essential features of the present disclosure. Therefore, it should be understood that the embodiments described above are illustrative in all respects and not restrictive.

## Claims

1. A method of manufacturing a metal-polymer composite material having excellent thermal conductivity and electrical insulating properties, the method comprising:
(a) preparing a powder mixture of polymer powder and metal powder; and
(b) spark plasma sintering (SPS) the powder mixture to produce a composite material.

2. The method according to claim 1, wherein the polymer comprises (i) a thermosetting resin selected from phenol resins, epoxy resins, and polyimide resins, or (ii) a thermoplastic resin selected from olefinic resins, acrylic resins, vinylic resins, styrenic resins, fluoric resins, and fibrin resins.

3. The method according to claim 1, wherein the polymer comprises a polyesteric resin.

4. The method according to claim 3, wherein the polyesteric resin comprises polyarylate (PAR).

5. The method according to claim 1, wherein the metal comprises one kind of metal or an alloy of more than one kind of metal selected from a group including Al, Cu, Ti, Mg, K, Ca, Sc, V, Cr, Mn, Fe, Co, Ni, Zn, Ga, Rb, Sr, Y, Zr, Mo, Ru, Rh, Pd, Ag , Cd, In, Sn, Cs, Ba, La, Ce, Nd, Sm, Eu, Gd, Tb, W, Cd, Sn, Hf, Ir, Pt, and Pb.

6. The method according to claim 1, wherein the metal comprises Al, Mg, or Al-Mg alloy.

7. The method according to claim 1, wherein in the step (b), the spark plasma sintering is performed at a temperature of 150 to 450°C under a pressure of 5 to 100 MPa for 1 to 10 minutes.

8. A metal-polymer composite material having excellent thermal conductivity and electrical insulating properties, manufactured according to claim 1.

9. The metal-polymer composite material according to claim 8, wherein the metal-polymer composite material has a composition of 1 to 99% by volume of metal and 1 to 99% by volume of polymer.

10. The metal-polymer composite material according to claim 8, wherein the metal-polymer composite material comprises a functionally graded material (FGM) having a sheet shape of a structure in which two or more layers having different volume ratios of polymer and metal are stacked.
